# EUROPÄISCHE PATENTSCHRIFT

(11) **EP 0 692 355 B1**
(45) Veröffentlichungstag und Bekanntmachung des Hinweises auf die Patenterteilung: **02.06.1999**
(21) Anmeldenummer: 95106185.2
(22) Anmeldetag: 26.04.1995
(51) Int. Cl.: B29B 17/02, B29B 13/10, B03C 1/02, B03C 7/06

(54) **Verfahren und Anlage zur Aufwertung von bei Zerkleinerungsprozessen entstehenden heterogenen Stoffgemischen**
Method and installation for upgrading heterogeneous mixed scrap resulting from comminution processes
Procédé et installation pour la valorisation de rebut hétérogène provenant des procédés de broyage

(30) Priorität: 06.05.1994 DE 4415905
(43) Veröffentlichungstag der Anmeldung: 17.01.1996
(73) Patentinhaber: HENSCHEL RECYCLING TECHNIK GMBH, 34127 Kassel (DE)
(72) Erfinder: Serban, Petre, Dipl.-Ing., D-34125 Kassel (DE); Schäfer, Siegmar, Dr.-Ing., D-09599 Freiberg (DE); Häusler, Dietrich, D-34292 Ahnatal (DE); Bornemann, Hans-Joachim, Dipl.-Ing., D-34246 Vellmar (DE); Sinning, Wilfried, D-34225 Buanatal 7 (DE); Tölle, Ulrich, D-34369 Hofgeismar (DE)

(56) Entgegenhaltungen:
- DE-A- 4 244 449
- DE-A- 4 301 066
- DE-A- 4 313 977
- DE-A- 4 320 950
- US-A- 3 970 546
- P.E. PLAST EUROPE, Nr.2, Juni 1993, MÜNCHEN, DE Seiten 171 - 173 B. DUBRULLE D ORCHEL 'MIXED PLASTICS RECYCLING / RECYCLER LES MELANGES HETEROGENES'
- DATABASE WPI Section Ch, Week 8440, Derwent Publications Ltd., London, GB; Class AMX, AN 82-244006 C40! & DD-A-210 219 (VEB METALLAUF. HALLE) 6. Juni 1984

## Beschreibung

Die Erfindung betrifft ein Verfahren und eine Anlage zur Aufwertung von bei Zerkleinerungsprozessen entstehenden heterogenen Stoffgemischen, insbesondere von bei einer Zerkleinerung durch Shreddern anfallenden Reststoffen, wie der Shredder-Leichtfraktion.

Aus der DE-OS 4313977 sind ein Verfahren und eine Anlage zur Wiederverwertung von Kunststoff-Hausmüllabfällen bekannt. Verfahrensgemäß werden die Kunststoff-Hausmüllabfälle zerkleinert und die metallischen Bestandteile separiert, wonach das Gemisch einer Niedertemperatur-Verschmelzungs-Behandlung unterworfen wird. Abschließend erfolgt ein Ausformen von kleinen Körpern (Pellets) mit einem Durchmesser von 5 bis 10 mm, die einer weiteren Verwertung zuführbar sind. Als Anlagenkomponenten finden ein Extruder mit beheizten Doppelwalzen zum Aufschmelzen und Verkneten des Kunststoffmüllgemischs und eine Vorrichtung zum Formen der plastifizierten Masse in Pellets Verwendung.

Nach vorbeschriebener technischer Lehre kann insbesondere dann nicht effizient gearbeitet werden, wenn es sich nicht um Kunststoffe, sondern um ein stark heterogenes Ausgangsmaterial verschiedenster Stoffe und Stoffgruppen handelt.

Der Erfindung liegt die Aufgabe zugrunde, in Zerkleinerungsvorrichtungen anfallende heterogene Stoffgemische über eine weitgehende Stofftrennung einer Verwertung zuzuführen.

Diese Aufgabe wird erfindungsgemäß durch ein Verfahren zur Aufwertung von insbesondere bei einer Zerkleinerung durch Shreddern anfallenden Reststoffen, wie der Shredder-Leichtfraktion gelöst, bei dem das heterogene Stoffgemisch einer Zerkleinerung unterworfen wird und in nachfolgenden Verfahrensschritten aus dem entstandenen Zwischenprodukt Partikel eines bestimmten Korngrößenbereiches abgetrennt und in einem Agglomerationsprozeß mit in Richtung steigender Korngröße begrenztem Agglomerationsgrad zugeführt werden.

Des weiteren wird die Aufgabe gelöst, indem eine Anlage zur Aufwertung von insbesondere bei einer Zerkleinerung durch Shreddern anfallenden Reststoffen, wie der Shredder-Leichtfraktion, mit einer Zerkleinerungsvorrichtung für eine Zerkleinerung des heterogenen Stoffgemisches zur Umwandlung in ein Zwischenprodukt, eine Agglomerationseinrichtung mit begrenztem Agglomerationsgrad für das Zwischenprodukt oder für Teilfraktionen von diesem aufweist.

Mit der Erfindung ist der Vorteil verbunden, daß im Ergebnis des Agglomerationsprozesses ein vereinzelungsfähiges Produkt eines bestimmten Korngrößenbereiches vorliegt, ohne daß dieses Produkt für eine Verwertung desselben einer weiteren Zerkleinerung unterliegen müßte. Weiterhin lassen sich aus diesem vereinzelungsfähigen Produkt bei Vorliegen vorbestimmbarer Korngrößenbereiche bestimmte Stoffgruppen abtrennen, da während des speziellen, in der Korngrößenzunahme begrenzten Agglomerationsprozesses die entstehenden Bindungsenergien zwischen unterschiedlichen Stoffen bzw. Stoffgruppen wesentlich geringer als unter gleichartigen Materialien wie beispielsweise Metallen sind.

Zweckmäßige Ausgestaltungen der Erfindung sind den Unteransprüchen zu entnehmen.

Nachfolgend soll die Erfindung anhand eines Ausführungsbeispieles, welches die Aufwertung der bei Shredderprozessen entstehenden Reststofffraktion betrifft, näher erläutert werden.

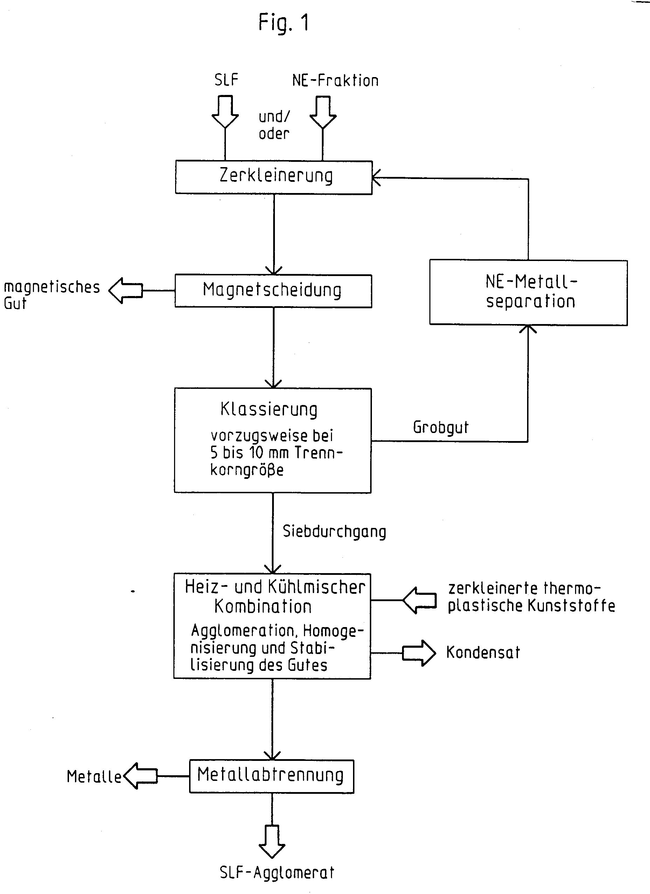

Es zeigen
- Fig. 1: ein Blockschema des erfindungsgemäßen Verfahrens und
- Fig. 2: eine Darstellung des Verfahrens nach Fig. 1 mit für die Durchführung des Verfahrens wichtigen Anlagenbestandteilen.

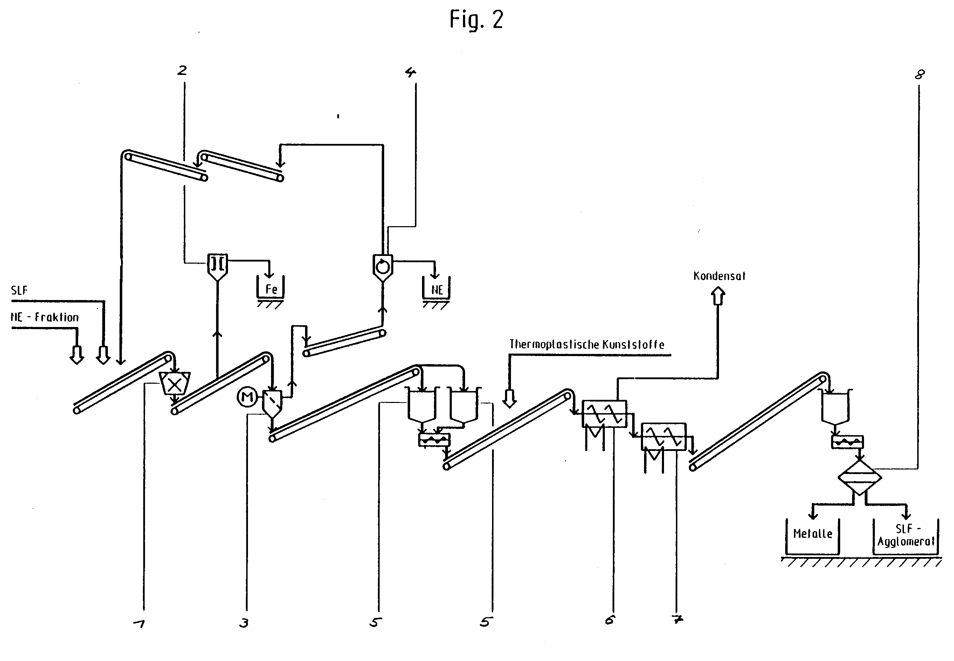

Bei den Reststoffen ist zwischen einer NE-Fraktion und einer Shredder-Leichtfraktion zu unterscheiden. Beide Fraktionen werden einer Zerkleinerung unterworfen, wobei die Zerkleinerung der Shredder-Leichtfraktion vorzugsweise in einer Stabmühle 1 stattfindet (Fig. 2).

Dem Prozeß der Zerkleinerung folgt eine Magnetabscheidung mittels eines Überbandmagneten 2 und eine Klassierung. Zur Klassierung in einem Trommelsieb 3 wird eine Trennkorngröße von 5 bis 10 mm eingestellt. Das über der Trennkorngröße liegende Grobgut durchläuft einen Wirbelstromabscheider 4 zur NE-Metallseparation, worauf eine nochmalige Zerkleinerung des verbleibenden Materials in der Stabmühle 1 erfolgt.

Haben die Partikel des Grobgutes gegebenenfalls nach mehrfacher Zerkleinerung in der Stabmühle 1 die Trennkorngröße unterschritten, werden sie gemeinsam mit dem Feingut in als Pufferspeicher wirkenden Bunkern 5 zwischengelagert, um nachfolgend in einem Heizmischer 6 und einem Kühlmischer 7 einem Agglomerationsprozeß zur Homogenisierung und Stabilisierung des Gutes unterworfen zu werden.

Im Ergebnis des unter Zugabe von thermoplastischen Kunststoffen ablaufenden Agglomerationsprozesses entsteht ein vereinzelungsfähiges Produkt, aus dem insbesondere Metalle über einen Koronawalzenabscheider 8 unkompliziert abgetrennt werden können.

## Patentansprüche

1. Verfahren zur Aufwertung von bei Zerkleinerungsprozessen entstehenden heterogenen Stoffgemischen, insbesondere von bei einer Zerkleinerung durch Shreddern anfallenden Reststoffen, wie der Shredder-Leichtfraktion, bei dem das heterogene Stoffgemisch einer Zerkleinerung unterworfen wird und in nachfolgenden Verfahrensschritten aus dem entstandenen Zwischenprodukt Partikel eines bestimmten Korngrößenbereiches abgetrennt und einem Agglomerationsprozeß mit in Richtung steigender Korngröße begrenztem Agglomerationsgrad zugeführt werden.

2. Verfahren nach Anspruch 1, dadurch gekennzeichnet, daß der Agglomerationsgrad in Abhängigkeit vom Einsatzzweck des Agglomerationsproduktes innerhalb eines bestimmten Korngrößenbereiches eingestellt wird.

3. Verfahren nach Anspruch 1 oder 2, dadurch gekennzeichnet, daß der Agglomerationsgrad derart gewählt wird, daß eine Vereinzelung der Partikel des Agglomerationsproduktes möglich ist.

4. Verfahren nach Anspruch 1 oder 2, dadurch gekennzeichnet, daß die Einstellung des Agglomerationsgrades in Abhängigkeit von der während des Agglomerationsprozesses entstehenden Bindungskraftdifferenz zwischen Partikeln gleichartiger und unterschiedlicher Stoffe bzw. Stoffgruppen erfolgt.

5. Verfahren nach Anspruch 1 dadurch gekennzeichnet, daß für das im Ergebnis der Zerkleinerung des heterogenen Stoffgemisches entstehende Zwischenprodukt eine Trennkorngröße festgelegt wird, wobei die Partikel des Zwischenproduktes, die über der Trennkorngröße liegen, einer nochmaligen Zerkleinerung unterzogen werden.

6. Verfahren nach Anspruch 5, dadurch gekennzeichnet, daß für eine Trennung des Zwischenproduktes in Bereiche unterschiedlicher Korngröße eine Trennkorngröße von 5 bis 10 mm ausgewählt wird.

7. Verfahren nach Anspruch 1 oder 5, dadurch gekennzeichnet, daß aus dem Zwischenprodukt eine Abtrennung magnetischer Bestandteile erfolgt.

8. Verfahren nach Anspruch 1 oder 5, dadurch gekennzeichnet, daß von dem Zwischenprodukt NE-Metalle separiert werden

9. Verfahren nach Anspruch 1, dadurch gekennzeichnet, daß der Agglomerationsprozeß unter Zugabe thermoplastischer Kunststoffe abläuft.

10. Verfahren nach Anspruch 1, dadurch gekennzeichnet, daß von dem Agglomerationsprodukt Metalle abgetrennt werden.

11. Anlage zur Aufwertung von bei Zerkleinerungsprozessen entstehenden heterogenen Stoffgemischen, insbesondere von bei einer Zerkleinerung durch Shreddern anfallenden Reststoffen, wie der Shredder-Leichtfraktion, mit einer Zerkleinerungsvorrichtung (1) für eine Zerkleinerung des heterogenen Stoffgemisches zur Umwandlung in ein Zwischenprodukt dadurch gekennzeichnet daß die Anlage eine Agglomerationseinrichtung (6, 7) mit begrenztem Agglomerationsgrad für das Zwischenprodukt oder für Teilfraktionen von diesem aufweist.

12. Anlage nach Anspruch 11, dadurch gekennzeichnet, daß die Zerkleinerungsvorrichtung eine Stabmühle (1) ist.

13. Anlage nach Anspruch 11 oder 12, dadurch gekennzeichnet, daß in dieser ein Heizmischer (6) und ein Kühlmischer (7) oder eine entsprechende Kombination beider zur Durchführung der Agglomeration zum Einsatz gelangt.

14. Anlage nach Anspruch 11, 12 oder 13, dadurch gekennzeichnet, daß ein Koronawalzenabscheider (8) zur Abtrennung von Metallen aus dem Agglomerationsprodukt vorgesehen ist.

## Claims

1. Process for revalorising heterogeneous mixtures of substances produced in comminuting processes, in particular residual substances occurring in the course of comminution by shredding, such as the light fraction from shredding, in which process the heterogeneous mixture of substances is subjected to comminution and, in subsequent process steps, particles in a certain grain-size range are divided off from the intermediate product produced and are fed to an agglomeration process with a degree of agglomeration which is limited in the direction of increasing grain size.

2. Process according to claim 1, characterised in that the degree of agglomeration is set within a certain grain-size range in dependence upon the intended use of the agglomeration product.

3. Process according to claim 1 or 2, characterised in that the degree of agglomeration is selected in such a way that isolation of the particles of the agglomeration product is possible.

4. Process according to claim 1 or 2, characterised in that the degree of agglomeration is set in dependence upon that difference in linkage force which is produced during the agglomeration process, between particles of homogeneous and different substances or groups of substances.

5. Process according to claim 1, characterised in that a separating grain size is fixed for the intermediate product produced in the result of comminution of the heterogeneous mixture of substances, those particles of the said intermediate product which lie above the separating grain size being subjected to renewed comminution.

6. Process according to claim 5, characterised in that a separating grain size of 5 to 10 mm is selected for separation of the intermediate product into ranges of different grain size.

7. Process according to claim 1 or 5, characterised in that magnetic constituents are divided off from the intermediate product.

8. Process according to claim 1 or 5, characterised in that nonferrous metals are separated from the intermediate product.

9. Process according to claim 1, characterised in that thermoplastic plastics are added during the course of the agglomeration process.

10. Process according to claim 1, characterised in that metals are divided off from the agglomeration product.

11. Installation for revalorising heterogeneous mixtures of substances produced in comminuting processes, in particular residual substances occurring in the course of comminution by shredding, such as the light fraction from shredding, the said installation having a comminuting device (1) for the comminution of the heterogeneous mixture of substances for conversion into an intermediate product, characterised in that the installation has an agglomeration arrangement (6, 7) with a limited degree of agglomeration for the intermediate product or for partial fractions of the latter.

12. Installation according to claim 11, characterised in that the comminuting device is a rod mill (1).

13. Installation according to claim 11 or 12, characterised in that, in the said installation, a heating mixer (6) and a cooling mixer (7), or a suitable combination of the two, is/are used for performing the agglomeration.

14. Installation according to claim 11, 12 or 13, characterised in that a corona-roller separator (8) is provided for dividing-off metals from the agglomeration product.

## Revendications

1. Procédé de valorisation de mélanges hétérogènes de matières issus de processus de broyage, en particulier de matières résiduelles qui sont produites lors d'un broyage au moyen d'un dispositif de déchiquetage, telles que la fraction légère du produit issu du dispositif de déchiquetage, dans lequel le mélange de matières hétérogène est soumis à un broyage et, dans des étapes ultérieures du procédé, des particules d'une granulométrie déterminée sont séparées du produit intermédiaire obtenu et amenées dans un processus d'agglomération donnant un degré d'agglomération limité dans le sens d'une granulométrie croissante.

2. Procédé selon la revendication 1, caractérisé en ce que le degré d'agglomération est réglé en fonction du but d'utilisation du produit d'agglomération, à l'intérieur d'une plage déterminée de granulométrie.

3. Procédé selon la revendication 1 ou 2, caractérisé en ce que le degré d'agglomération est choisi de façon telle qu'une désagrégation des particules du produit aggloméré est possible.

4. Procédé selon la revendication 1 ou 2, caractérisé en ce que le degré d'agglomération se détermine en fonction de la différence de force de liaison qui nait pendant le processus d'agglomération, entre des particules de matières identiques et différentes, ou de groupes de matières identiques et différents.

5. Procédé selon la revendication 1, caractérisé en ce que pour le produit intermédiaire obtenu en tant que résultat du broyage du mélange hétérogène de matières, une granulométrie de séparation est fixée, les particules du produit intermédiaire qui se situent audessus de la granulométrie de séparation étant soumises à un nouveau broyage.

6. Procédé selon la revendication 5, caractérisé en ce que pour une séparation du produit intermédiaire en domaines de granulométrie différentes, on choisit une dimension de grain de séparation de 5 à 10 mm.

7. Procédé selon la revendication 1 ou 5, caractérisé en ce qu'il se produit une séparation des magnétiques à partir du produit intermédiaire.

8. Procédé selon la revendication 1 ou 5, caractérisé en ce que les métaux non ferreux se séparent du produit intermédiaire.

9. Procédé selon la revendication 1, caractérisé en ce que le processus d'agglomération s'effectue avec addition de matières thermoplastiques.

10. Procédé selon la revendication 1, caractérisé en ce que les métaux se séparent du produit d'agglomération.

11. Installation destinée à la valorisation de mélanges de matières hétérogènes issues de processus de broyage, en particulier de matières résiduelles produites lors d'un broyage au moyen d'un dispositif de déchiquetage, telles que la fraction légère du produit issu d'un dispositif de déchiquetage, comportant un dispositif de broyage (1) destiné à un broyage du mélange de matière hétérogène pour la transformation en un produit intermédiaire, caractérisée en ce que l'installation présente un dispositif d'agglomération (6, 7) à degré d'agglomération limité pour le produit intermédiaire ou pour des fractions partielles de celui-ci.

12. Installation selon la revendication 11, caractérisée en ce que le dispositif de broyage est un broyeur à tiges (1).

13. Installation selon la revendication 11 ou 12, caractérisée en ce qu'on utilise dans celle-ci un mélangeur chauffant (6) et un mélangeur refroidisseur (7), ou une combinaison correspondante des deux, pour l'exécution de l'agglomération.

14. Installation selon la revendication 11, 12 ou 13, caractérisée en ce que, pour la séparation des métaux à partir du produit d'agglomération, est prévu un dispositif de séparation (8) à rouleaux à effet corona.
